# EUROPÄISCHE PATENTANMELDUNG

(11) **EP 2 648 348 A1**
(43) Veröffentlichungstag der Anmeldung: **09.10.2013**
(21) Anmeldenummer: 13161592.4
(22) Anmeldetag: 28.03.2013
(51) Int. Cl.: H04H 60/33, H04H 60/81, H04H 60/46

(54) **Verfahren zur Erfassung des Nutzerverhaltens und der Vorlieben von Radiohörern**

(30) Priorität: 02.04.2012 DE 102012205332
(71) Anmelder: Medialysis GmbH, 39326 Loitsche (DE)
(72) Erfinder: Körner, Marcus, 39116 Magdeburg (DE); Thumm, Jochen, 39326 Colbitz (DE)
(74) Vertreter: Dreiss

(57) **Zusammenfassung**

Es wird ein Verfahren zur Erfassung des Nutzerverhaltens von Radiohörern oder Fernsehzuschauern vorgeschlagen, das eine qualifizierte Untersuchung des Nutzerverhaltens durch eine bidirektionale Kommunikation zwischen einer Zentraleinheit 5 und Endgeräten 3 ermöglicht.

## Beschreibung

Die Erfindung betrifft Verfahren nach den nebengeordneten Ansprüchen 1 und 6, ein Computerprogramm nach Anspruch 11 sowie ein Endgerät zur Durchführung des erfindungsgemäßen Verfahrens nach dem nebengeordneten Anspruch 13.

Die Erfassung der Nutzung von Radios und des Verhaltens der Radiohörer hat für Medienunternehmen große Bedeutung.

Aus der DE 43 337 548 A1 ist ein Verfahren zur Erfassung des Nutzerverhaltens von Fernsehzuschauern bekannt. Bei diesem verfahren werden die Informationen über das Nutzerverhalten zeitlich verzögert an eine Zentraleinheit übermittelt.

Des Weiteren ist aus der DE 10 2004 063 671 A1 ein Verfahren zur Quotenerfassung bekannt bei dem das Kennsignal eines Radiosenders zusammen mit einem dem Nutzer zuordenbaren Nutzersignal kombiniert und an eine Zentraleinheit übermittelt wird. Mit Hilfe dieses in Echtzeit ablaufenden automatisierten Verfahrens kann die Reichweite verschiedener Radiosender sehr präzise erfasst werden.

Allerdings ist die Kommunikation zwischen dem Radionutzer und dem Zentraleinheit nur in eine Richtung - nämlich vom Hörer zur Zentraleinheit - möglich. Diese Beschränkung auf eine unidirektionale Kommunikation setzt der Erfassung des Hörverhaltens Grenzen.

Der vorliegenden Erfindung liegt die Aufgabe zu Grunde, ein Verfahren bereitzustellen, welches eine genauere Erfassung des Hörverhaltens ermöglicht, sodass qualifiziertere Rückschlüsse auf die Akzeptanz, beziehungsweise das Gefallen oder Missfallen der gesendeten Programminhalte mit einer Auflösung/einem Detaillierungsgrad bis hin zu einzelnen Musik- oder Wortbeiträgen und/oder die Programmgestaltung gezogen werden können.

Dazu ist bei dem erfindungsgemäßen Verfahren zur Erfassung des Nutzerverhaltens von Radiohörern vorgesehen, dass ein Signal, bevorzugt ein FM-Signal und das zugehörige Kennsignal (RDS-Signal) eines Radiosenders oder Fernsehsenders von einem Endgerät empfangen wird und ein eindeutig einem Nutzer zuordenbares Nutzersignal erzeugt wird, dass an ein oder mehrere Endgeräte mindestens eine Frage oder Information drahtlos von einer Zentraleinheit übermittelt wird, und dass die von dem oder den Nutzern des oder der Endgeräte gegebenen Antworten zusammen mit dem Nutzersignal drahtlos von dem oder den Endgeräten an die Zentraleinheit übermittelt werden.

Durch die erfindungsgemäße bidirektionale Kommunikation zwischen einer der erfindungsgemäßen Zentraleinheit und den Endgeräten ist es bspw. möglich, nach dem Abspielen eines Liedes, dem Nutzer die Frage zu stellen, wie ihm dieses Lied gefallen hat. Entsprechendes gilt natürlich auch für Wortbeiträge oder eine ganze Sendung.

Es lassen sich aber auch eine Vielzahl andere Fragen formulieren, deren Antworten zu einem verbesserten Verständnis des Nutzerverhaltens bzw. der Rezeption der angebotenen Programme führt. Natürlich können auf diese Weise auch Fragen an den Nutzer übermittelt werden, die in keinem Zusammenhang mit den Inhalten der Radiosendung stehen, so dass mit Hilfe des erfindungsgemäßen Verfahrens beispielsweise Meinungsumfragen durchgeführt werden können.

Durch die Formulierung der Fragen, die von der Zentraleinheit an die Endgeräte übermittelt werden, lassen sich individuell auf die zu untersuchende Radio- oder Fernsehsendung zugeschnittene Informationen gewinnen.

Des Weiteren ist es möglich, durch eine geschickte Formulierung der Frage, den Aufwand für das Beantworten der Fragen drastisch reduzieren. So können beispielsweise gleich mehrere "standardisierte" Antworten von der Zentraleinheit zusammen mit den Fragen übermittelt. Dadurch wird nicht nur der Nutzer entlastet, sondern es ergibt sich der weitere Vorteil, dass eingehenden Antworten sehr gut automatisiert und/oder statistisch auswertbar sind.

Das erfindungsgemäße Verfahren kann sehr einfach mit den heute am Markt verfügbaren Radios, Digitalradios (DAB und DAB+), insbesondere den Autoradios, aber auch Fernsehgeräten oder anderen Multi-Media-Geräten, wie zum Beispiel Computern mit Radio- und/oder Fernsehempfang oder Smartphones, durchgeführt werden.

Moderne Autoradios haben in aller Regel einen berührungsempfindlichen Bildschirm (Touchscreen) sowie eine Freisprecheinrichtung. Dadurch ist es möglich, die Kommunikation von der Zentraleinheit an das Endgerät, hier das Autoradio, und vom Endgerät an die Zentraleinheit über die Freisprecheinrichtung bzw. das damit verbundene Mobilfunktelefon abzuwickeln. Da für die Kommunikation zwischen der Zentraleinheit und dem Endgerät keine Sprachübertragung erforderlich ist, kann dies bspw. auch in Form einer SMS erfolgen. Selbstverständlich sind aber auch alle anderen Arten der drahtlosen Kommunikation möglich, wie z.B. eine machine-to-machine-Kommunikation (M2M), eine herkömmliche Sprachverbindung über Funktelefonie oder eine Kommunikation über das mobile (drahtlose) Internet.

Das Anzeigen der vorgelegten Fragen kann beispielsweise über den zum Autoradio gehörenden Bildschirm erfolgen. Wenn es sich um einen berührungsempfindlichen Bildschirm handelt, können auch die Antworten schon in Art eines multiple choice Tests auf dem Bildschirm angezeigt werden und der Nutzer kann durch berühren des entsprechenden "Kästchens" die Antwort geben.

Allerdings natürlich auch über den touch-screen oder eine Eingabetastatur ein vom Nutzer verfasster Text als Antwort eingegeben werden.

Diese Antworten werden dann über drahtlose Kommunikation an die Zentraleinheit übermittelt. Damit ist somit die bi-direktionale Kommunikation zwischen der Zentraleinheit und dem Endgerät abgeschlossen.

In gleicher Weise kann auch ein Smartphone zur Durchführung des erfindungsgemäßen Verfahrens eingesetzt werden. Smartphones erfüllen alle hardware-seitigen Voraussetzungen, wie einen Radio- oder Fernsehempfangsteil, einen Touchscreen oder einen normalen Bildschirm und eine Eingabetastatur. Zur Durchführung des erfindungsgemäßen Verfahrens bedarf es lediglich einer Software-Applikation (nachfolgend als "App" bezeichnet), in der die erforderlichen Funktionalitäten realisiert sind.

Selbstverständlich ist es auch denkbar, dass die von der Zentraleinheit an das Radio oder den Fernseher übermittelte Frage über die zum Autoradio beziehungsweise den Fernseher gehörenden Lautsprecher akustisch an den Nutzer des Endgeräts übertragen wird. Über das Mikrofon einer Freisprecheinrichtung kann dann auch die Antwort vom Nutzer durch Sprechen gegeben werden. Mit den heute verfügbaren Spracherkennungs-Algorithmen können diese Antworten weiterverarbeitet werden.

In weiterer vorteilhafter Ausgestaltung des erfindungsgemäßen Verfahrens wird zumindest ein Teil des Kennsignals des Radio- oder Fernsehsenders an die Zentraleinheit übermittelt. Dadurch ist eindeutig festgelegt, welchen Sender der Nutzer des Endgeräts zum Zeitpunkt der Fragestellung hört.

Wie bereits erwähnt, kann die bi-direktionale Kommunikation zwischen der Zentraleinheit und den Endgeräten auf verschiedenste Arten und Weisen erfolgen.

Alle am Markt verfügbaren Standards, wie bspw. Mobilfunk, die Nutzung der Sendefrequenzen des Digitalradios, insbesondere DAB oder DAB+, die Datenübertragung per GPRS, mobilem Internet oder machine-to-machine-Kommunikation sind ebenfalls möglich. Die Durchführung des erfindungsgemäßen Verfahrens ist jedoch nicht auf eine dieser Funkstandards beschränkt. Es ist offensichtlich, dass grundsätzlich jede drahtlose oder drahtgebundene Kommunikation geeignet ist und es vor allem eine Frage der Kosten und der Verfügbarkeit ist, welcher bi-direktionalen drahtlosen Kommunikation im Einzelfall vorgegeben wird.

In weiterer vorteilhafter Ausgestaltung der Erfindung ist vorgesehen, dass das Nutzersignal, die Antwort des Nutzers und ein Teil des Kennsignals vor dem Senden an die Zentraleinheit in ein sendetaugliches Signal umgewandelt wird. Des Weiteren erfolgt vorteilhafterweise nur dann eine Kommunikation vom Endgerät an die Zentraleinheit, wenn der Nutzer eine Antwort eingegeben hat und/oder sich das Kennsignal des vom Nutzer gehörten Radiosenders ändert.

Die der Erfindung zugrundeliegende Aufgabe wird seitens der Zentraleinheit durch ein Verfahren umfassend die folgenden Verfahrensschritte gelöst:
es werden eine oder mehrere Fragen oder Informationen von einer Zentraleinheit an eine oder mehrere Endgeräte gesendet. Anschließend werden die von den Endgeräten gesendeten Antworten von der Zentraleinheit zusammen mit den Nutzersignalen und ggf. den Kennsignalen des Radiosenders empfangen und anschließend ausgewertet.

Selbstverständlich ist es vorteilhaft, wenn die von den Endgeräten empfangenen Informationen vor der Auswertung in auswertbare und/oder speicherbare Daten umgewandelt werden.

Ein weiterer Vorteil des erfindungsgemäßen Verfahrens ist darin zu sehen, dass bei der Auswertung der von den Endgeräten empfangenen Informationen mit Hilfe des Nutzersignals auch demoskopische relevante Informationen, wie bspw. das Alter des Nutzers und/oder dessen Geschlecht, in der Auswertung bzw. bi den mit diesen Informationen durchgeführten demoskopischen Untersuchungen kombiniert werden können. Dadurch wird eine erheblich höhere Aussagekraft als bei einer uni-dirktioonalen Kommunikation nach dem Stand der Technik erreicht. Im Ergebnis lassen sich Ergebnisse erreichen, die mit den Umfrageergebnissen eines Meinungsforschungsinstituts vergleichbar sind.

Selbstverständlich ist es auch möglich, das erfindungsgemäße Verfahren dazu zu nutzen, bei sehr aktuellen tagespolitischen Ereignissen, allen Nutzern, deren Endgeräte aktiviert sind, Fragen zu diesem Ereignis zu stellen und nach dem Rücklauf der Antworten diese im Sinne einer Meinungsumfrage auszuwerten.

Alternativ ist es möglich, dass nur bestimmten Nutzern bestimmte Fragen vorgelegt werden. So können bspw. weil ja zu den Nutzern demoskopische Angaben hinterlegt sind, Fragen, die nur an Frauen gerichtet werden sollen, eben nur an die Endgeräte von Nutzerinnen übermittelt werden. Dadurch kann eine weitere Verbesserung der Ergebnisse der Nutzerbefragung erreicht werden.

Die erfindungsgemäßen Vorteile können auch mit einem Computerprogramm sowie einem Endgerät zur Durchführung eines der Verfahren gemäß den Ansprüchen 1 bis 5 erreicht werden. Damit lassen sich die erfindungsgemäßen Vorteile ebenfalls realisieren. Um Wiederholungen zu vermeiden wird auf das zuvor Gesagte verwiesen.

### Zeichnung

Es zeigen:
- Figuren 1 und 2:: Ausführungsbeispiele der zur Durchführung des erforderlichen Verfahrens notwendigen Infrastruktur und
- Figur 3:: ein Ablaufdiagramm eines Ausführungsbeispiels eines erfindungsgemäßen Verfahrens.

### Beschreibung der Ausführungsbeispiele

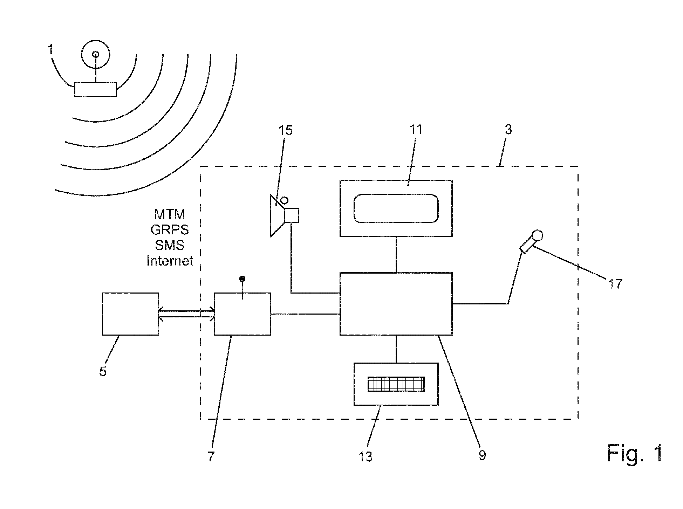

In der Figur 1 ist mit dem Bezugszeichen 1 ein Radio- oder ein und Fernsehsender 1 als "Blackbox" mit einer stilisierten Antenne stark vereinfacht dargestellt. Mit dem Bezugszeichen 3 ist ein Endgerät zur Durchführung des erfindungsgemäßen Verfahrens bezeichnet. Das Bezugszeichen 5 bezeichnet eine Zentraleinheit zur Durchführung des erfindungsgemäßen Verfahrens.

Die Zentraleinheit 5 und das Endgerät 3 können über eine drahtlose bi-direktionale Kommunikation miteinander kommunizieren. Dabei sind verschiedenste Funkstandards einsetzbar. Beispielhaft, jedoch nicht abschließend seien die machine-to-machine-Kommunikation (MTM), der GPRS-Standard, die Kommunikation über SMS, und das (mobile) Internet genannt.

Das Endgerät 3 umfasst mehrere Komponenten und Baugruppen, die nachfolgend etwas näher erläutert werden.

Zunächst ist mit dem Bezugszeichen 7 eine Sende- und Empfangseinrichtung gekennzeichnet. Diese Sende- und Empfangseinrichtung 7 ist mit einem Mikrokontroller 9 verbunden. An den Mikrokontroller 9 sind mehrere Anzeigeeinrichtungen und Eingabeeinrichtungen angeschlossen. So ist bspw. mit dem Bezugszeichen 11 ein Bildschirm, der bevorzugt als berührungsempfindlicher Bildschirm ausgebildet ist, angedeutet. Des Weiteren ist eine Eingabeeinrichtung in Form einer Tastatur 13 angedeutet. Wenn der Bildschirm 11 ein berührungsempfindlicher Bildschirm ist, kann auf die Tastatur 13 in aller Regel verzichtet werden.

Des Weiteren sind noch ein Lautsprecher 15 und ein Mikrofon 17 angedeutet, die akustische Ausgabeeinrichtungen bzw. Eingabeeinrichtungen sind.

Eine Vielzahl moderner Autoradios erfüllt die hardwareseitigen Voraussetzungen, die an ein erfindungsgemäßen Endgerät 3 gestellt werden. Des Weiteren stellen die meisten modernen Autoradios eine Freisprecheinrichtung für ein Mobilfunktelefon dar. Somit weisen diese Autoradios ein Mikrofon 17 auf und auch die Lautsprecher 15 sind selbstverständlich bei jedem Autoradio vorhanden.

Die Sende- und Empfangseinrichtung 7 wird durch das Mobilfunktelefon (nicht explizit dargestellt), welches mit der Freisprecheinrichtung des Autoradios bspw. über Bluetooth kommuniziert, bereitgestellt. Somit sind bei Autoradios des beschriebenen Typs alle technischen Voraussetzungen für die Durchführung des erfindungsgemäßen Verfahrens gegeben. In diesem Fall erfolgt die drahtlose Kommunikation zwischen dem Endgerät 3 und der Zentraleinheit 5 über einen Mobilfunkstandard erfolgen. Da es sich in aller Regel nicht um Sprachübertragung handelt, kann man bspw. die Kommunikation über GPRS durchführen.

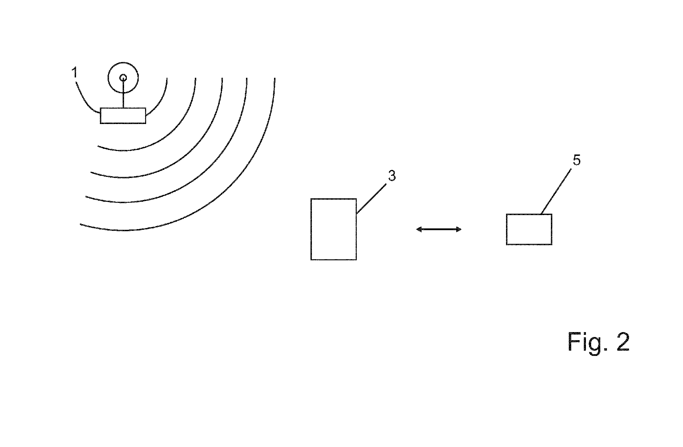

In der Figur 2 wird eine alternative Realisierungsmöglichkeit des erfindungsgemäßen Verfahrens am Beispiel eines Smartphones oder Computers mit Touchscreen beschrieben. Die genannten Endgeräte sind mit Hilfe einer häufig sogar schon vorinstallierten Software in der Lage, Radioprogramme als UKW und auch als Digitalradio (DAB, DAB+) zu empfangen. Ein Beispiel für ein solches Smartphone ist das Samsung "Galaxy". Für dieses oder vergleichbare andere Geräte gibt es auch Dockingstationen, so dass man sie als stationäre Geräte, Autoradios und auch mobile Geräte einsetzen kann.

Diese Endgeräte werden über einen Touchscreen gesteuert, welches an nahezu allen Orten und auch im Auto Radioprogramme abspielen kann. Eine eigens für die Durchführung des erfindungsgemäßen Verfahrens erstellte Softwareapplikation (APP) und eine M2M-Schnittstelle in Form einer SIM-Speicherkarte oder eines Chips wird zu diesem Zweck auf dem Gerät installiert. Mit Hilfe der M2M-Schnittstelle kann erfolgt die Kommunikation zwischen dem Endgerät 3 und der Zentraleinheit 5. Durch diese M2M-Lösung kann man dann entsprechend auch Fragebögen von der Zentraleinheit 5 an die Endgeräte 3 versenden und die Antworten von dem Endgerät 3 zur Zentraleinheit 5 senden.

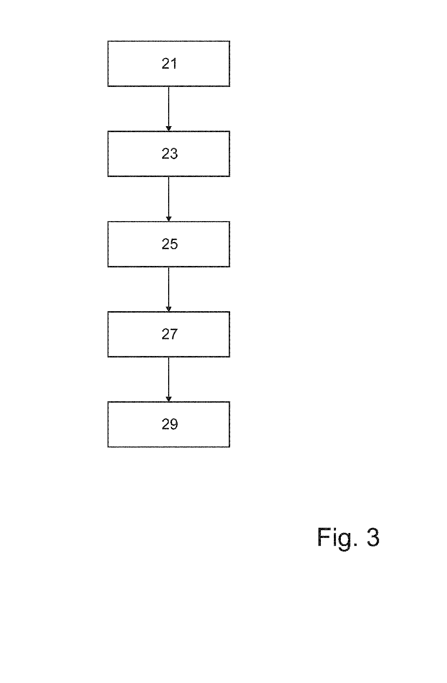

Anhand der Figur 3 wird nun beispielhaft der Ablauf des erfindungsgemäßen Verfahrens erläutert.

In einem ersten Block 21 erfolgt die Übermittlung einer oder mehrerer Fragen bzw. Informationen von der Zentraleinheit 5 an mindestens ein Endgerät 3. Jedes der aktiven Endgeräte 3, d.h. bspw. der eingeschalteten Autoradios, das die Fragen bzw. Informationen von der Zentraleinheit 5 empfangen hat, zeigt diese Fragen bzw. Informationen dem Nutzer des Autoradios mithilfe einer Ausgabeeinheit 11, wie bspw. eines Touchscreens oder eines Lautsprechers 15 an (Block 23).

Nachdem der Nutzer des Endgeräts die Fragen bzw. Informationen erhalten hat, beantwortet er die Fragen bzw. reagiert auf die Informationen in einem dritten Block 25. In einem vierten Block 27 werden die Antworten des Nutzers zusammen mit anderen Informationen, wie z.B. einer eindeutigen Nutzerkennung und/oder dem Kennsignal des gehörten Radiosenders, verbunden und anschließend dieses Datenpaket an die Zentraleinheit 5 übermittelt.

Im fünften Block 29 erfolgt dann die Auswertung aller von den Endgeräten an die Zentraleinheit 5 übermittelten Antworten bevorzugt in der Zentraleinheit 5.

## Patentansprüche

1. Verfahren zur Erfassung der Hörgewohnheiten von Radiohörern, **gekennzeichnet durch** folgende Verfahrensschritte:
Empfangen eines FM-Signals und des zugehörigen Kennsignals (RDS-Signal) eines Radio- oder Fernsehsenders (1),
Filtern des empfangenen Kennsignals (RDS-Signal, Kennsignal nach dem DAB-Standard oder dem DAB+-Standard) aus dem gesamten Empfangssignal des Senders (1) und
Erzeugen eines eindeutig einem Nutzer zuordenbaren Nutzersignals (PS),
**dadurch** gekennzeichnet, dass
an ein oder mehrere Endgeräte (3) mindestens eine Frage oder Information drahtlos von einer Zentraleinheit (5) übermittelt wird, dass die von dem oder den Nutzern des oder der Endgeräte (3) gegebenen Antworten zusammen mit dem Nutzersignal (PS) drahtlos von dem oder den Endgeräten (3) an die Zentraleinheit (5) übermittelt werden.

2. Verfahren nach Anspruch 1, **dadurch gekennzeichnet, dass** zusätzlich mindestens ein Teil des Kennsignal (RDS-Signal, PI Code, DAB, DAB+) des Senders an die Zentraleinheit (5) übermittelt wird.

3. Verfahren nach Anspruch 1 oder 2, **dadurch gekennzeichnet, dass** die Kommunikation zwischen der Zentraleinheit (5) und den Endgeräten (3) über Mobilfunk, insbesondere per SMS, Sendefrequenzen des Digitalradios (DAB, DAB+, GPRS, Machine-to-Machine-Kommunikation oder per Internet erfolgt.

4. Verfahren nach Anspruch 1 oder 2, **dadurch gekennzeichnet, dass** das Nutzer-Signal (PS-Signal), die Antwort des Nutzers und ein Teil des Kennsignals (RDS-Signal, PI Code, DAB, DAB+) vor dem Senden an die Zentraleinheit (5) in ein sendetaugliches Signal umgewandelt wird.

5. Verfahren nach einem der Ansprüche 1 bis 4, **dadurch gekennzeichnet, dass** nur dann eine Kommunikation vom Endgerät (3) an die Zentraleinheit (5) erfolgt, wenn der Nutzer eine Antwort eingegeben hat und/oder sich das Kennsignal (RDS-Signal, Kennsignal nach dem DAB-Standard oder dem DAB+-Standard) geändert hat.

6. Verfahren zur Ermittlung und Auswertung der Hörgewohnheiten von Radiohörern, **gekennzeichnet durch** folgende Verfahrensschritte:
Senden einer oder mehrerer Fragen oder Informationen von einer Zentraleinheit (5) an ein oder mehrere Endgeräte (3),
Empfangen der von den Endgeräten (3) gesendeten Antworten zusammen mit den Nutzer-Signalen (PS-Signal) und
Auswerten der Antworten.

7. Verfahren nach Anspruch 6, **dadurch gekennzeichnet, dass** die von den Endgeräten (3) empfangenen Informationen vor der Auswertung in auswertbare und/oder speicherbare Daten umgewandelt werden.

8. Verfahren nach einem der Ansprüche 6 und 7, **dadurch gekennzeichnet, dass** bei der Auswertung der von den Endgeräten (3) empfangenen Informationen mit für demoskopische Untersuchungen relevanten Informationen über den oder die Nutzer kombiniert werden.

9. Verfahren nach einem der Ansprüche 6 bis 8, **dadurch gekennzeichnet, dass** die Ergebnisse der Auswertung auf einem Datenausgabegerät ausgegeben werden.

10. Verfahren nach einem der Ansprüche 6 bis 9, **dadurch gekennzeichnet, dass** die Ergebnisse der Auswertung auf einem Speichermedium abgespeichert werden.

11. Verfahren nach einem der Ansprüche 1 bis 10, **dadurch gekennzeichnet, dass** die Kommunikation zwischen Endgeräten (3) und Zentraleinheit (5) über eine drahtlose bi-direktionale Kommunikation, insbesondere machine-to-machine-Kommunikation (MTM), nach dem GPRS-Standard, über SMS, und das (mobile) Internet erfolgt.

12. Computerprogramm zur Erfassung und/oder zur Ermittlung und Auswertung der Hörgewohnheiten von Radiohörern, **dadurch gekennzeichnet, dass** es nach einem der Verfahren nach den Ansprüchen 1 bis 5 und/oder 6 bis 10 arbeitet.

13. Computerprogramm nach Anspruch 12, **dadurch gekennzeichnet, dass** es auf einem Speichermedium abspeicherbar ist.

14. Endgerät (3) zur Durchführung eines der Verfahren nach den Ansprüchen 1 bis 5 sowie Anspruch 11, **dadurch gekennzeichnet, dass** es ein Smart-phone oder ein Radio (3) mit einer Eingabeeinrichtung (11) und einer Ausgabeeinrichtung (13) sowie einem Sendemodul (7) ist.

15. Endgerät nach Anspruch 14, **dadurch gekennzeichnet, dass** das Radio ein Autoradio ist, welches einen Bildschirm (11), bevorzugt einen touch-screen, und eine Freisprecheinrichtung für ein Mobilfunktelefon umfasst.

16. Endgerät nach Anspruch 14 oder 15, **dadurch gekennzeichnet, dass** es über mit der Zentraleinheit (5) 3) und Zentraleinheit (5) über eine drahtlose bi-direktionale Kommunikation, insbesondere machine-to-machine-Kommunikation (MTM), nach dem GPRS-Standard, über SMS, und das (mobile) Internet, kommuniziert.
